# EUROPEAN PATENT APPLICATION

(11) **EP 4 629 398 A1**
(43) Date of publication of application: **08.10.2025**
(21) Application number: 24188042.6
(22) Date of filing: 11.07.2024
(51) Int. Cl.: H01M 10/44, H01M 4/04, H01M 10/058, H01M 10/04, H01M 10/0525

(54) **METHOD OF FORMATION AND CAPACITY GRADING FOR LITHIUM-ION BATTERIES**

(30) Priority: 01.04.2024 CN 202410390690
(71) Applicant: Eve Energy Co., Ltd., Huizhou, Guangdong 516006 (CN)
(72) Inventor: Chen, Zhiwei, Huizhou, Guangdong, 516006 (CN); Liu, Rongjiang, Huizhou, Guangdong, 516006 (CN); Huang, Binbin, Huizhou, Guangdong, 516006 (CN)
(74) Representative: Michalski Hüttermann & Partner Patentanwälte mbB

(57) **Abstract**

Disclosed in the present disclosure is a method of formation and capacity grading for lithium-ion batteries, including the following steps: Formation: charging the SOC of the lithium-ion battery to be greater than or equal to 100%, wherein a charging process comprises at least a first stage, a second stage, a third stage, a fourth stage, and a fifth stage; and applying pressure to two opposite surfaces of the lithium-ion battery at each stage, wherein the pressure applied at the first stage is 0.1-0.3Mpa, the pressure applied at the second stage is 0.3-0.5Mpa, the pressure applied at the third stage is 0.8-1.2Mpa, the pressure applied at the fourth stage is 0.3-0.5Mpa, and the pressure applied at the fifth stage is 0.8-1.2Mpa. Capacity Grading: fixing the lithium-ion battery after formation; applying pressure to 50-100kg on the two opposite surfaces of the lithium-ion battery; and performing a capacity grading cycle.

## Description

### Field

The present disclosure relates to the field of lithium-ion batteries and, particularly, to a method of formation and capacity grading for lithium-ion batteries.

### Background

With the rapid development of the new energy industry, the application of lithium-ion batteries is gradually increasing, in which digital products are important application areas, such as cell phones, laptops and so on. Such products are flexible packaging housing with aluminum-plastic film. Compared with the battery with metal housing, they have advantages such as thinness, malleability, and high model conversion efficiency, but the high expansion rate of lithium-ion battery after cycles and the low hardness of flexible packaging housing with aluminum-plastic film lead to the poor safety of lithium-ion batteries.

There are a number of effective means of reducing the expansion rate after cycles in the relevant techniques. For example, the use of a current collector with a special reticulated porous structure may effectively alleviate the volume change of the silicon-based negative electrode material during the process of insertion and deinsertion of lithium-ions, so that the active layer of the negative electrode may always be in contact with the current collector. Therefore, combining the silicon-based negative electrode material with the current collector improves the formation of pores in the structure of the electrode sheet due to the repeated expansion and contraction of the silicon-based negative electrode material during cycling, and reduces the expansion rate of the negative electrode sheet, thereby alleviating the capacity degradation. However, the processing of the current collector with a special reticulated porous structure is complicated and unique, resulting in a high cost of raw materials.

There are also related techniques to reduce the expansion rate of lithium-ion battery after cycles by design methods such as reducing the surface density of the electrode sheet, and compacting, but the improvement by the method reduces the electrical performance of lithium-ion batteries, such as energy density.

### Summary

Provided in the present disclosure is a method of formation and capacity grading for lithium-ion batteries, including the following steps:
step 1: Formation: charging the state of charge (hereinafter referred as SOC) of the lithium-ion battery to be greater than or equal to 100%, wherein a charging process comprises at least a first stage, a second stage, a third stage, a fourth stage, and a fifth stage; and applying pressure to two opposite surfaces of the lithium-ion battery at each stage, wherein the pressure applied at the first stage is 0.1-0.3 Mpa, the pressure applied at the second stage is 0.3-0.5 Mpa, the pressure applied at the third stage is 0.8-1.2 Mpa, the pressure applied at the fourth stage is 0.3-0.5 Mpa, and the pressure applied at the fifth stage is 0.8-1.2 Mpa;
step 2: Capacity Grading: fixing the lithium-ion battery after formation; applying pressure to 50-100 kg on the two opposite surfaces of the lithium-ion battery; and performing a capacity grading cycle.

In the method of formation and capacity grading for lithium-ion batteries of the present disclosure, when forming the lithium-ion batteries, step-variable pressures are applied, and the lithium-ion batteries are charged to a high level, i.e., the SOC thereof is over 100%. In order to match the changing trend of the internal stress of the electrode sheet during the charging process, the two opposite surfaces of the lithium-ion battery to be formed are applied with step-variable pressures, so that the internal stress of the electrode sheet is varied in high and low levels and is effectively released, so as to avoid the use of constant pressure resulting in the expansion of the electrode sheet and lithium-ion battery from uncontrolled variations. The pressures of the first stage to the fifth stage are in the respective ranges mentioned above, which ensures not only the bonding of the active material particles of the electrode sheet to give full play to the performance of the battery, but also the full release of the internal stress of the electrode sheet. The lithium-ion batteries are charged to a high level (fully charged as well as beyond fully charged state), which allows the electrode sheets to fully expand. Further, the capacity grading is performed on the lithium-ion battery after formation. When performing the capacity grading, a clamp is used to fasten and apply pressure to the surfaces of the lithium-ion battery, and the lithium-ion battery is charged and discharged in cycles, so that the battery completes a part of the expansion of cycles in advance in the state of fastening and applying pressure of 50-100 kg. The applied pressure being 50-100 kg not only ensures the bonding of the active substance particles of the electrode sheet to give full play to the performance of the battery, but also ensures the internal stress of the electrode sheet to be fully released. By synergizing the above formation process and capacity grading process, the expansion rate of lithium-ion batteries after cycles is greatly reduced, the growth rate of internal resistance is lowered, and the retention rate of lithium-ion batteries after cycles is greatly improved.

### Brief description of the drawings

Fig. 1 is a graph of the number of charge/discharge cycles versus the thickness expansion rate in the lithium-ion batteries of Examples 1-3 and Contrast Examples 1-5.
Fig. 2 is a graph of the number of charge/discharge cycles versus the capacity retention rate in the lithium-ion batteries of Examples 1-3 and Contrast Examples 1-5.

### Detailed description of the embodiments

In some implementations, in step 1, the formation includes charging the SOC of the lithium-ion battery to 103%-125%, which may be, but is not limited to the values listed below, such as 103%, 105%, 108%, 110%, 113%, 115%, 118%, 120%, 123%, 125%, and other values in the range but not listed are also applicable.

The lithium-ion battery is charged to a state of over full charge in the present scheme, which allows the expansion of electrode sheet to approach a maximum value, and a larger part of the expansion during the cycle may be completed in advance, which leads to a further significant reduction in the expansion rate after cycles, a reduction in the growth rate of internal resistance, and a great improvement in the capacity retention rate after cycles of the lithium-ion battery.

In some implementations, the ratio of the time for applying pressure at the first stage, at the second stage, at the third stage, at the fourth stage, and at the fifth stage is (2~3):(3~5):(45~60):(5~15):(5~20), which may be, but is not limited to the values listed below, such as 2:3:45:5:5, 2:4:50:8:10, 2:5:55:12:15, and 2:5:60:15:20, and other values in the range but not listed are also applicable.

In some implementations, in step 1, the method of formation is specifically as follows: charging at constant current of 0.02C-0.05C for 2-3 min in the first stage, charging at constant current of 0.1C-0.2C for 3-5 min in the second stage, charging at constant current of 1C-1.5C for 45-60 min in the third stage, charging at constant current of 0.1C-0.3C for 10-20min in the fourth stage, and charging at constant current of 0.1C-0.3C in the fifth stage, charging at constant current of 0C for 5-20 min in the fifth stage. The constant current in the first stage may be, but is not limited to the values listed below, such as 0.02C, 0.03C, 0.04C, and 0.05C, and other values in the range but not listed are also applicable. The constant-current charging time in the first stage may be, but is not limited to the values listed below, such as 2 min, 2.5 min, and 3 min, and other values in the range but not listed are also applicable. The constant current in the second stage may be, but is not limited to the values listed below, such as 0.1C, 0.15C, and 0.2C, and other values in the range but not listed are also applicable. The constant-current charging time in the second stage may be, but is not limited to the values listed below, such as 3 min, 4 min, and 5 min, and other values in the range but not listed are also applicable. The constant current in the third stage may be, but is not limited to the values listed below, such as 1C, 1.2C, and 1.5C, and other values in the range but not listed are also applicable. The constant-current charging time in the third stage may be, but is not limited to the values listed below, such as 45 min, 50 min, 55 min, and 60 min, and other values in the range but not listed are also applicable. The constant current in the fourth stage may be, but is not limited to the values listed below, such as 0.1C, 0.2C, and 0.3C, and other values in the range but not listed are also applicable. The constant-current charging time in the fourth stage may be, but is not limited to the values listed below, such as 10 min, 15 min, and 20 min, and other values in the range but not listed are also applicable. The constant-current charging time in the first stage may be, but is not limited to the values listed below, such as 5 min 10 min, 15 min, and 20 min, and other values in the range but not listed are also applicable.

In step 1 of the present scheme, the method of the formation is specifically as follows: charging at constant current of 0.02C-0.05C for 2-3 min in the first stage, charging at constant current of 0.1C-0.2C for 3-5 min in the second stage, charging at constant current of 1C-1.5C for 45-60 min in the third stage, charging at constant current of 0. 1C-0.3C for 10-20 min in the fourth stage, and charging at constant current of 0.1C-0.3C in the fifth stage, charging at constant current of 0C for 5-20 min in the fifth stage. The five-stage charging current and charging time being in the above range improves the charging power (SOC), allowing the battery to be fully charged or over fully charged state, thereby further enabling the expansion of the electrode sheet to approach a higher value, completing a larger part of the expansion after cycles in advance, dramatically lowering the expansion rate after cycles, reducing the growth rate of the internal resistance, and dramatically increasing the capacity retention rate after cycles of the lithium-ion batteries.

In some implementations, a formation temperature of the first stage, the second stage, the third stage and the fourth stage in step S1 is 60-90 °C, which may be, but is not limited to the values listed below, such as 60 °C, 70 °C, 80 °C, and 90 °C, and other values in the range but not listed are also applicable.

A formation temperature of the first stage, the second stage, the third stage and the fourth stage in step 1 of the present scheme is 60-90 °C. The setting of the formation temperature of the first stage, the second stage, the third stage and the fourth stage in step 1 of the present scheme being 60-90 °C not only ensures that the temperature is high enough to allow the electrode group to be well bonded and firmly adhered so as to ensure that the lithium-ion battery has an appropriate hardness, but also slows down the aging and decomposition of the electrode group and electrolyte materials, so as to prevent the lithium-ion battery from being softened at a relatively fast rate, ensure that the lithium-ion battery has an appropriate hardness, and improve the electrical performance of the lithium-ion battery.

In some implementations, the formation temperature of the fifth stage in step 1 is 20-30 °C, which may be, but is not limited to the values listed below, such as 20 °C, 22 °C, 25 °C, 28 °C, and 30 °C, and other values in the range but not listed are also applicable.

In step 1 of the present scheme, the formation temperature in the fifth stage is 20-30 °C, which not only allows the activity and kinetics of the raw materials in the lithium-ion battery to be improved, thereby improving the electrical performance of the lithium-ion battery, but also allows the lithium-ion battery to undergo a cooling and forming process, and the internal stress may be effectively relieved, so that the thickness of the lithium-ion battery recoils little and the electrical performance becomes better.

In some implementations, in step 2, the capacity grading cycle includes: setting aside, charging at constant current at a first charging rate to a first cut-off voltage, setting aside, discharging at constant current at a second discharging rate to a second cut-off voltage, and cycling the charging and discharging work steps.

In some implementations, the first charging rate is 0.5-5C, and the first cut-off voltage is 4.2V-4.5V The first charging rate may be, but is not limited to the values listed below, such as 0.5C, 1C, 1.5C, 2C, 2.5C, 3C, 3.5C, 4C, 4.5C, and 5C, and other values in the range but not listed are also applicable. The first cut-off voltage may be, but is not limited to the values listed below, such as 4.2V, 4.3V, 4.4V, and 4.5V, and other values in the range but not listed are also applicable.

In some implementations, the second charging rate is 0.5-3C, and the first cut-off voltage is 2.5V-3.0V The first charging rate may be, but is not limited to the values listed below, such as 0.5C, 1C, 1.5C, 2C, 2.5C, and 3C, and other values in the range but not listed are also applicable. The second cut-off voltage may be, but is not limited to the values listed below, such as 2.5V, 2.8V, and 3V, and other values in the range but not listed are also applicable.

In some implementations, the time for the setting aside is 5-10 min, which may be, but is not limited to the values listed below, such as 5 min, 6 min, 7 min, 8 min, 9 min, and 10 min, and other values in the range but not listed are also applicable.

In some implementations, a quantity of the capacity grading cycles is 5-50, which may be, but is not limited to the values listed below, such as 5, 10, 15, 20, 25, 30, 35, 40, 45, and 50, and other values in the range but not listed are also applicable.

The setting in the present scheme of the quantity of the capacity grading cycles being 5-50 not only ensures the effective release of the internal stress of the electrode sheet, so as to allow a high degree of completion of the cyclic expansion of the lithium-ion battery, but also reduces the reaction of the raw materials in the lithium-ion battery and reduces the consumption of the active substance, so as to improve the lithium-ion battery capacity retention rate after cycles.

The following Examples and Contrast Examples show the preparation of a lithium-ion battery after liquid injection and resting.

### (1) Preparation of positive electrode sheet

The positive active material LCO (lithium cobaltate), binder PVDF (polyvinylidene fluoride), dispersant PVP (polyvinylpyrrolidone), and conductive agent SP (conductive carbon black Super-P) were mixed and stirred well according to a mass ratio of 97.4%:1.6%:0.2%:0.8% to obtain a positive electrode slurry, and the positive electrode slurry was then coated on aluminum foil via the coating process. After drying and cold pressing process, the positive electrode sheet was obtained.

### (2) Preparation of negative electrode sheet

The negative active material graphite, binder SBR (styrene-butadiene rubber), dispersant CMC (carboxymethyl cellulose), and conductive agent SP (conductive carbon black Super-P) were mixed and stirred well according to a mass ratio of 96.7%: 1.5%: 1.2%:0.6% to obtain the negative electrode slurry, and the negative electrode slurry was then coated on copper foil via the coating process. After drying and cold pressing process, the negative electrode sheet was obtained.

### (3) Selection of electrolyte

Vinyl carbonate electrolyte was selected for the preparation of lithium-ion batteries.

### (4) Selection of Separator

PE (polyethylene) film served as the separator.

### (5) Preparation of lithium-ion batteries

The above positive electrode sheet, separator, negative electrode sheet were stacked in order, so that the separator was between the positive electrode sheet and the negative electrode sheet to play the role of isolation, and they were then wound to obtain a bare cell. The bare cell was placed in an outer packaging housing, injected with electrolyte after drying, encapsulated in vacuum, and rested. Finally, the lithium-ion battery after liquid injection and resting was obtained.

### Example 1

Step 1: Placing the lithium-ion battery, after liquid injection and resting, into a clamp plate of a pressure formation cabinet;

Step 2: Setting up the formation process: 0.1 Mpa in the first stage, 0.3 Mpa in the second stage, 0.8 Mpa in the third stage, 0.3 Mpa in the fourth stage, 0.8 Mpa in the fifth stage, constant current charging at 0.02C for 2 min in the first stage, constant current charging at 0.1C for 3 min in the second stage, constant current charging at 1C for 60 min in the third stage, constant current charging at 0.1C for 15 min in the fourth stage, constant current charging at 0C for 10 min in the fifth stage, temperature of 75 °C in the first, second, third and fourth stages, temperature of 25 °C in the fifth stage, and starting the formation work step until the SOC was 103%.

Step 3: Taking out the lithium-ion battery after completion of the formation, and placing it into a clamp plate of a capacity grading cabinet;

In step 4: Setting up the capacity grading process: fastening and fixing the lithium-ion battery after the formation with a clamp, applying a pressure value of 50kg; (1) setting aside for 10min, (2) charging at 0.5C to a cut-off voltage of 4.5V, (3) setting aside for 5min, (4) discharging at 0.5C to a cut-off voltage of 3.0V, and cycling continuously from (2)-(4) for 10 times.

### Example 2

Step 1: Placing the lithium-ion battery, after liquid injection and resting, into a clamp plate of a pressure formation cabinet;

Step 2: Setting up the formation process: 0.2 Mpa in the first stage, 0.4 Mpa in the second stage, 1 Mpa in the third stage, 0.4 Mpa in the fourth stage, 1Mpa in the fifth stage, constant current charging at 0.03C for 3 min, constant current charging at 0.2C for 4 min in the second stage, constant current charging at 1.3C for 50 min in the third stage, constant current charging at 0.2C for 10 min in the fourth stage, constant current charging at 0C for 15 min in the fifth stage, temperature of 80 °C in the first, second, third and fourth stages, temperature of 25°C in the fifth stage, and starting the formation work step until the SOC was 113.2%.

Step 3: Taking out the lithium-ion battery after completion of the formation, and placing it into a clamp plate of a capacity grading cabinet;

In step 4: Setting up the capacity grading process: fastening and fixing the lithium-ion battery after the formation with a clamp, applying a pressure value of 75 kg; (1) setting aside for 10min, (2) charging at 3C to a cut-off voltage of 4.5V, (3) setting aside for 5min, (4) discharging at 1C to a cut-off voltage of 3.0V, and cycling continuously from (2)-(4) for 15 times.

### Example 3

Step 1: Placing the lithium-ion battery, after liquid injection and resting, into a clamp plate of a pressure formation cabinet;

Step 2: Setting up the formation process: 0.3 Mpa in the first stage, 0.5 Mpa in the second stage, 1.2 Mpa in the third stage, 0.5 Mpa in the fourth stage, 1.2 Mpa in the fifth stage, constant current charging at 0.02C for 3 min, constant current charging at 0.2C for 5 min in the second stage, constant current charging at 1.5C for 45min in the third stage, constant current charging at 0.3C for 20 min in the fourth stage, constant current charging at 0C for 20 min in the fifth stage, temperature of 85°C in the first, second, third and fourth stages, temperature of 30°C in the fifth stage, and starting the formation work step until the SOC was 124.3%.

Step 3: Taking out the lithium-ion battery after completion of the formation, and placing it into a clamp plate of a capacity grading cabinet;

In step 4: Setting up the capacity grading process: fastening and fixing the lithium-ion battery after the formation with a clamp, applying a pressure value of 100kg; (1) setting aside for 10min, (2) charging at 5C to a cut-off voltage of 4.5V, (3) setting aside for 5min, (4) discharging at 1C to a cut-off voltage of 3.0V, and cycling continuously from (2)-(4) for 30 times.

### Contrast Example 1

The present Contrast Example is the same as Example 3 except that there is no fifth stage of the formation process.

### Contrast Example 2

In step 4 of the present Contrast Example: the lithium-ion battery after formation was (1) setting aside for 10min, (2) charging at 0.5C to a cut-off voltage of 4.5V, (3) setting aside for 5min, (4) discharging at 0.5C to a cut-off voltage of 3.0V, and cycling continuously from (2)-(4) for 30 times. The rest is the same as Example 3.

### Contrast Example 3

The present Contrast Example is the same as Example 3 except that the SOC of the formation process is 80%.

### Contrast Example 4

The present Contrast Example is the same as Example 3 except that the applied pressure value of the capacity grading process is 120 kg.

### Contrast Example 5

The present Contrast Example is the same as Example 3 except that the applied pressure value of the capacity grading process is 30 kg.

### Performance Test:

### (1) Tests for capacity retention rate and thickness expansion rate

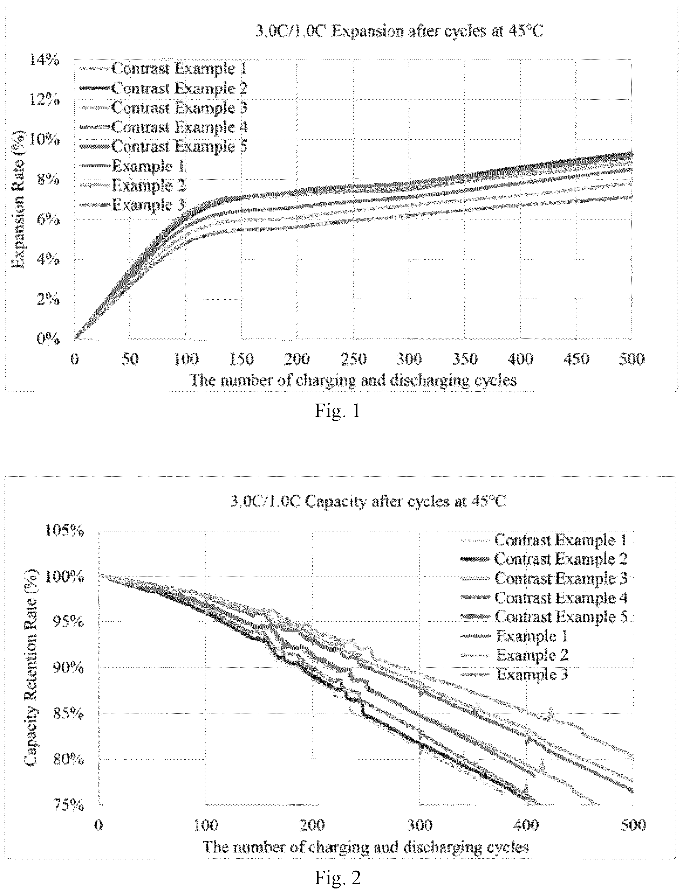

The batteries to be cycle test prepared by the above Examples and Contrast Examples were subjected to open-circuit voltage testing, and the batteries after the completion of the open-circuit voltage testing were taken out and placed into the charge and discharge test cabinet. Setting up charge and discharge steps: (1) setting aside for 10min, (2) charging at 3.0C rate to the cut-off voltage of 4.5V, (3) setting aside for 5min, (4) discharging at 1.0C rate to the cut-off voltage of 3.0V, conducting a full charge and full discharge cycling test, cycling continuously from (2)-(4) steps for 1-500 times, and starting the cycle test work step. The capacity retention rate was measured, and the lithium-ion battery was removed to measure the thickness expansion rate (Thickness Expansion Rate = (Thickness Value at 380 or 500 cycles of 100% SOC - Thickness Value at 100% SOC prior to cycling) / Thickness Value at 100% SOC prior to cycling). The test results are ahown in Tables 1-2 anf Figs. 1-2, and the curves in Fig. 1 are, from bottom to top, Example 3, Example 2, Example 1, Contrast Example 5, Contrast Example 4, Contrast Example 3, Contrast Example 2, and Contrast Example 1. The curves in Fig. 2 are, from top to bottom, Example 3, Example 2, Example 1, Contrast Example 5, Contrast Example 4, Contrast Example 3, Contrast Example 2, and Contrast Example 1.

**Table 1**

| Thickness Expansion Rate | | Item |
|---|---|---|
| 500 | 380 | Number of cycles |
| 8.5% | 7.8% | Example 1 |
| 7.8% | 7.2% | Example 2 |
| 7.1% | 6.7% | Example 3 |
| 9.3% | 8.6% | Contrast Example 1 |
| 9.2% | 8.5% | Contrast Example 2 |
| 9.1% | 8.4% | Contrast Example 3 |
| 9.0% | 8.3% | Contrast Example 4 |
| 8.8% | 8.2% | Contrast Example 5 |

**Table 2**

| Capacity Retention Rate | | Item |
|---|---|---|
| 500 | 380 | Number of cycles |
| 76.4% | 83.5% | Example 1 |
| 77.6% | 84.2% | Example 2 |
| 80.3% | 86.0% | Example 3 |
| 68.5% | 76.2% | Contrast Example 1 |
| 69.0% | 76.9% | Contrast Example 2 |
| 69.5% | 77.4% | Contrast Example 3 |
| 72.3% | 79.9% | Contrast Example 4 |
| 72.6% | 80.5% | Contrast Example 5 |

### (2) Growth rate of internal resistance

The batteries of the Example and the Contrast Example were adjusted to 50% SOC and discharged at a current of 1C rate for 18 s at 25̊C, and the battery voltage U2 before the discharge was terminated, the current I, and the battery voltage U1 after the battery voltage was stabilized were recorded.The DC internal resistance R is obtained by calculating from the formula R=(U2-U1)/I. The DC internal resistance before and after battery cycling was recorded as R0 and R1, respectivly, and the changing rate of DC resistance = (R1-R0)/R0. The test results are shown in table 3 below.

**Table 3**

| Growth rate of internal | | Item |
|---|---|---|
| 500 | 380 | Number of cycles |
| 17.5% | 16.1% | Example 1 |
| 15.2% | 14.0% | Example 2 |
| 12.4% | 11.1% | Example 3 |
| 20.1% | 18.9% | Contrast Example 1 |
| 19.9% | 18.6% | Contrast Example 2 |
| 19.8% | 18.4% | Contrast Example 3 |
| 19.7% | 18.2% | Contrast Example 4 |
| 19.5% | 18.1% | Contrast Example 5 |

### Analysis of results:

As shown in Figs 1-2 and Tables 1-3, the thickness expansion rates of the lithium-ion battery after cycles are, in ascending order, Example 3 < Example 2 < Example 1 < Contrast Example 5 < Contrast Example 4 < Contrast Example 3 < Contrast Example 2 < Contrast example 1. The growth rates of the internal resistance of the lithium-ion battery are, in ascending order, Example 3 < Example 2 < Example 1< Contrast Example 5 < Contrast Example 4 < Contrast Example 3 < Contrast Example 2 < Contrast Eaxmple 1. The capacity retention rates of lithium-ion battery after cycles are, in descending order, Example 3 > Example 2 > Example 1 > Contrast Example 5 > Contrast Example 4 > Contrast Example 3 > Contrast Example 2 > Contrast Example 1. After 380 cycles of Example 1-3, the thickness expansion rates of the lithium-ion battery after cycles are still all ≤7.8%; the growth rates of the internal resistance of the lithium-ion battery are still all ≤16.1%; and the capacity retention rates of the lithium-ion battery after cycles are still all ≥83.5%. After 500 cycle of Example 1-3, the thickness expansion rates of the lithium-ion battery after cycles are still all ≤8.5%, the growth rates of the internal resistance of the lithium-ion battery are still all ≤17.5%, and the capacity retntion rates of the lithium-ion battery after cycles are still all ≥75%. This fullyillustrates that the method of formation and capacity grading for lithium-ion batteries in the present disclosure may substantially allow a reduction in the expansion rate of lithium-ion batteries after cycles, a reduction in the growth rate of internal resistance, and a great improvement in the capacity retention rate of lithium-ion batteries after cycles.

Compared to Example 3, the fifth stage of the formation process was not performed in Contrast Example 1, which results in a lithium-ion battery without a cooling and shaping process. The electrode sheet was unable to be effectively bound, and the expansion continues to increase, which results in the lithium-ion battery having a large thickness recoil and deteriorating electrical properties. After 380 cycles, the thickness expansion rate of the lithium-ion battery after cycles in Contrast Example 1 was up to 8.6%, the growth rate of the internal resistance of the lithium-ion battery in Contrast Example 1 was up to 18.9%, and the capacity retention rate of the lithium-ion battery after cycles in Contrast Example 1 was down to 76.2%.

Compared to Example 3, the absence of an applied pressure value of 100 kg for step S4 in Contrast Example 2 causes the capacity grading process of lithium-ion battery to have no effective binding of pressure, the expansion of the electrode sheet continues to increase, the reaction of raw materials in the lithium-ion battery is increased, the consumption of the active material is increased, and the capacity retention rate of the lithium-ion battery after cycles is lowered. After 380 cycles, the thickness expansion rate of the lithium-ion battery after cycles in Contrast Example 2 was up to 8.5%, the growth rate of the internal resistance of the lithium-ion battery in Contrast Example 2 was up to 18.6%, and the capacity retention rate of the lithium-ion battery after cycles in Contrast Example 2 was down to 76.9%.

Compared to Example 3, the total charging SOC of the formation process in Contrast Example 3 was 80%, which did not allow for sufficient expansion of the electrode sheet. After 380 cycles, the thickness expansion rate of the lithium-ion battery after cycles in Contrast Example 3 was up to 8.4%, the growth rate of the internal resistance of the lithium-ion battery in Contrast Example 3 was up to 18.4%, and the capacity retention rate of the lithium-ion battery after cycles in Contrast Example 3 was down to 77.4%.

Compared to Example 3, a pressure value of 120 kg was applied to the batteries in the capacity grading process in Contrast Example 4, which results in detachment of the positive electrode active material, destruction of the structure of the active material, a high thickness expansion rate, a high growth rate of the internal resistance, and a low capacity retention rate. After 380 cycles, the thickness expansion rate of the lithium-ion battery after cycles in Contrast Example 4 was up to 8.3%, the growth rate of the internal resistance of the lithium-ion battery in Contrast Example 4 was up to 18.2%, and the capacity retention rate of the lithium-ion battery after cycles in Contrast Example 4 was down to 79.9%.

Compared to Example 3, a pressure value of 30kg was applied to the batteries in the capacity grading process in Contrast Example 5, which results in a significant reduction in the expansion of the electrode sheet completing a part of the cycles in advance. After 380 cycles, the thickness expansion rate of the lithium-ion battery after cycles in Contrast Example 5 was up to 8.2%, the growth rate of the internal resistance of the lithium-ion battery in Contrast Example 5 was up to 18.1%, and the capacity retention rate of the lithium-ion battery after cycles in Contrast Example 5 was down to 80.5%.

## Claims

1. A method of formation and capacity grading for lithium-ion batteries, comprising following steps:
step 1: Formation: charging a state of charge (hereinafter referred as SOC) of the lithium-ion battery to be greater than or equal to 100%, wherein a charging process comprises at least a first stage, a second stage, a third stage, a fourth stage, and a fifth stage; and applying pressure to two opposite surfaces of the lithium-ion battery at each stage, wherein the pressure applied at the first stage is 0.1-0.3 Mpa, the pressure applied at the second stage is 0.3-0.5 Mpa, the pressure applied at the third stage is 0.8-1.2 Mpa, the pressure applied at the fourth stage is 0.3-0.5 Mpa, and the pressure applied at the fifth stage is 0.8-1.2 Mpa; and
step 2: Capacity Grading: fixing the lithium-ion battery after formation; applying pressure to 50-100 kg on the two opposite surfaces of the lithium-ion battery; and performing a capacity grading cycle.

2. The method of formation and capacity grading for lithium-ion batteries according to claim 1, wherein, in step 1, the formation comprises charging the SOC of the lithium-ion battery to 103%-125%.

3. The method of formation and capacity grading for lithium-ion batteries according to claim 1, wherein, in step 1, the method of the formation is specifically as follows: charging at constant current of 0.02C-0.05C for 2-3 min in the first stage, charging at constant current of 0.1C-0.2C for 3-5 min in the second stage, charging at constant current of 1C-1.5C for 45-60 min in the third stage, charging at constant current of 0.1C-0.3C for 10-20 min in the fourth stage, and charging at constant current of 0.1C-0.3C in the fifth stage, charging at constant current of 0C for 5-20 min in the fifth stage.

4. The method of formation and capacity grading for lithium-ion batteries according to claim 1, wherein formation temperatures of the first stage, the second stage, the third stage and the fourth stage in step 1 are all 60-90 °C.

5. The method of formation and capacity grading for lithium-ion batteries according to claim 1, wherein a formation temperature of the fifth stage in step 1 is 20-30 °C.

6. The method of formation and capacity grading for lithium-ion batteries according to claim 1, wherein, in step 2, the capacity grading cycle comprises: setting aside, charging at constant current at a first charging rate to a first cut-off voltage, setting aside, discharging at constant current at a second discharging rate to a second cut-off voltage, and cycling charging and discharging work steps.

7. The method of formation and capacity grading for lithium-ion batteries according to claim 6, wherein the first charging rate is 0.5-5C, and the first cut-off voltage is 4.2V-4.5V.

8. The method of formation and capacity grading for lithium-ion batteries according to claim 6, wherein the second charging rate is 0.5-3C, and the second cut-off voltage is 2.5V-3.0V

9. The method of formation and capacity grading for lithium-ion batteries according to claim 6, wherein time for the setting aside is 5-10 min.

10. The method of formation and capacity grading for lithium-ion batteries according to any one of claims 1-9, wherein a quantity of the capacity grading cycles in step 2 is 5-50.
